# EUROPEAN PATENT SPECIFICATION

(11) **EP 1 542 530 B1**
(45) Date of publication and mention of the grant of the patent: **08.03.2017**
(21) Application number: 03707928.2
(22) Date of filing: 27.03.2003
(51) Int. Cl.: A01N 25/00, A01N 25/34, A01M 1/24, C09D 5/14, D06M 15/00, E04B 1/72, E04H 9/16, E04B 1/68, E04B 1/70

(54) **TERMITE AND WATERPROOF BARRIER**
GEGEN WASSER UND TERMITEN UNDURCHLÄSSIGE SPERRE
BARRIERE ETANCHE ANTI-TERMITES

(30) Priority: 27.03.2002 AU PS142302
(43) Date of publication of application: 22.06.2005
(73) Proprietor: Universal Polymers Pty Ltd, Kempsey NSW 2440 (AU)
(72) Inventor: HANNAY, Philip, Port Macquarie, NSW 2444 (AU); FRANKLIN, Roger, W., O'Connor, W.A. 6163 (AU); JEYNES, Paul, Paradise Point, QLD 4216 (AU)
(74) Representative: Wolff, Felix
(86) International application number: PCT/AU2003/000368
(87) International publication number: WO 2003/079780

(56) References cited:
- WO-A-97/09491
- WO-A-97/47190
- US-A- 6 088 950
- US-A- 6 094 857
- US-A1- 2001 000 370

## Description

This invention relates to an insect, more particularly termite and waterproof barrier.

### BACKGROUND OF THE INVENTION

Insects such as ants and termites can enter a building structure through very small openings, cracks and the like, often these gaps or openings not being readily discernable. While the invention is applicable to the provision of a barrier to insects the invention is particularly directed to the provision of a termite and waterproof barrier.

Termites usually enter a building from the ground, and physical barriers have been proposed to prevent the entry of termites into the building. These include concrete slabs, ant caps on posts or pillars supporting the building, and steel mesh. These physical barriers can be used in combination with chemical termiticide treatment of the soil around the footings and penetrations.

WO97/09491 discloses a method for preventing migration of termites or insects into a building by applying a settable or curable composition to points of entry. The known composition may comprise curable or settable components and inorganic additives and can be applied as a thick paint or coating which when cured forms a waterproof, flexible layer resistant to insects and termites.

Recent concern about the environmental effect of various termiticides such as organophosphates and organochlorines have resulted in restrictions being placed on the use of chemical treatment of the soil and or building structure.

It is an object of the invention to provide a physical barrier to prevent and or deter the entry of termites into a building.

A further object of the invention is to provide a composition which can be applied to areas of a building to close a possible entry point into the building.

A still further object of the invention is to provide a physical barrier in the form of a fabric coated or impregnated with the composition to close possible entry points.

A still further object of the invention is to provide a coated or impregnated fabric and to adhere the fabric to the structure by an application of a layer of the composition.

A still further object of the invention is to provide a termite and waterproof barrier having sufficient flexibility and elasticity to accommodate for any relevant movement between portions of the structure.

### BRIEF STATEMENT OF THE INVENTION.

There is provided according to the invention a waterproofing and insect and termite composition comprising inorganic additives, fibres, and a curable or settable component such as an acrylate latex, whereby the composition when applied as a thick paint or coating forms when it cures a waterproof, flexible membrane resistant to insects and termites.

### BRIEF DESCRIPTION OF THE DRAWINGS

Figure 1 is a view showing two possible entry points into a building,
Figure 2 is a view showing the barrier applied between two portions of the building,
Figure 3 shows one form of the fibre reinforced membrane,
Figure 4 shows the barrier applied to a brick veneer construction,
Figure 5 shows the barrier applied to an infill full brick construction,
Figure 6 shows an alternate barrier to the infill brick construction,
Figure 7 shows the barrier applied to foundation and footing slab, and
Figure 8 shows an alternate barrier to the foundation and footing slab.

### DETAILED DESCRIPTION OF THE INVENTION

The invention uses a composition that can be supplied in the form of a liquid, paste, gel or other similar form that can be applied to cracks, holes or gaps in building structures to form a waterproof and insect, particularly termite proof barrier.

In its preferred form the composition comprises an acrylic latex with inorganic additives and polyester fibres dispersed in the latex to form a composition that is waterproof and self-curing, resistant to insects, particularly termite attack. One example of the composition can include

| | %w/w |
|---|---|
| Calcium Carbonate | 25 |
| Polyester fibre | 15 |
| Styrene/butyl acrylate latex | 40 |
| Iron oxide pigment | 2 |
| Titanium dioxide | 2.5 |
| Plasticiser | 1 |
| Stabiliser | 1 |
| Biocide | 0.1 |
| Water | to 100% |

The composition can be varied widely and still remain functional.

The inorganic constituents can be varied in total amount, relative proportions and chemical composition. For any given chemical entity the amount can be varied from about 0% to about 50% of the total composition. The number of possible additives is vast and encompasses practically any inorganic salt, oxide or mineral. Practically, the choice is limited to readily available materials with low solubility in water, low toxicity, and no adverse environmental impact. Examples include calcium carbonate, titanium dioxide, iron oxides (haematite and magnetite), magnesium oxide, magnesium carbonate, silica, silicates etc. In addition it is possible to use other fillers such as plastic beads, metal filings, carbon (in the form of graphite, char, charcoal, carbon black etc) in place of or as well as inorganic constituents

The composition includes a settable or curable sealant. Suitable materials include acrylates, co-polymers, bitumen, water based silicones, polyurethane, chalking compounds, resins, latex and adhesives. The settable or curable sealant is essential to the performance of the product and can comprise 20 to 80% by weight of the product, typically about 40% to 60% by weight.

Minor constituents of the composition include catalysts, plasticisers, UV stabilisers and biocides. These additives are well known in this type of application and can be selected from a wide variety of materials. For example, glycols, polyethylene glycols, surfactants and phthalate esters can function as plasticisers and stabilisers; isothiazolines and formaldehyde are well-known examples of biocides used in aqueous formulations.

Many other minor additives can be incorporated in the product to modify its characteristics without altering its fundamental properties. For example, organic dyes or pigments could be used to extend the range of colours for decorative effects. Coarse materials such as sand or carborundum could be added to give the material non-slip properties. Most importantly termiticides could be added to enhance the termite resistant properties of the material. Examples of termiticides include organophosphates (such as chlorpyrifos) organochlorines (such as heptachlor), natural and synthetic pyrethroids (such as deltamethrin and permethrin) and inorganic compounds (such as compounds of arsenic, copper and boron).

However, organic compounds such as organophosphates, organochlorines and pyrethroids are intrinsically chemically unstable and liable to lose efficacy over a period substantially less than the lifetime of the barrier or liable to leach out of the barrier into the local environment, which in the case of a cavity wall treatment could be most undesirable. Inorganic compounds have the virtue of remaining efficacious as long as the barrier remains intact i.e., for the lifetime of the barrier and not likely to leach out of the barrier over a period of time. Arsenic and copper are not considered to be environmentally acceptable and therefore the preferred additive is a boron containing compound. Examples of boron containing compounds include boric acid, borax, borates, tetraborates and borohydrates although without limitation thereto.

The preferred boron-containing compound is boric acid. Preferably boric acid is present at concentrations of 2.0g/kg to 80g/kg or more. The preferred concentration is about 30g/kg, more particularly 5 to 10g/kg.

The composition can be used in conjunction with construction materials such as stainless steel mesh, fibre glass, woven plastic mesh (such as shade cloth, flywire, and the like) geotextile and other similar fabrics to form a water proof and insect, particularly termite, proof damp course and termite barrier in building cavities.

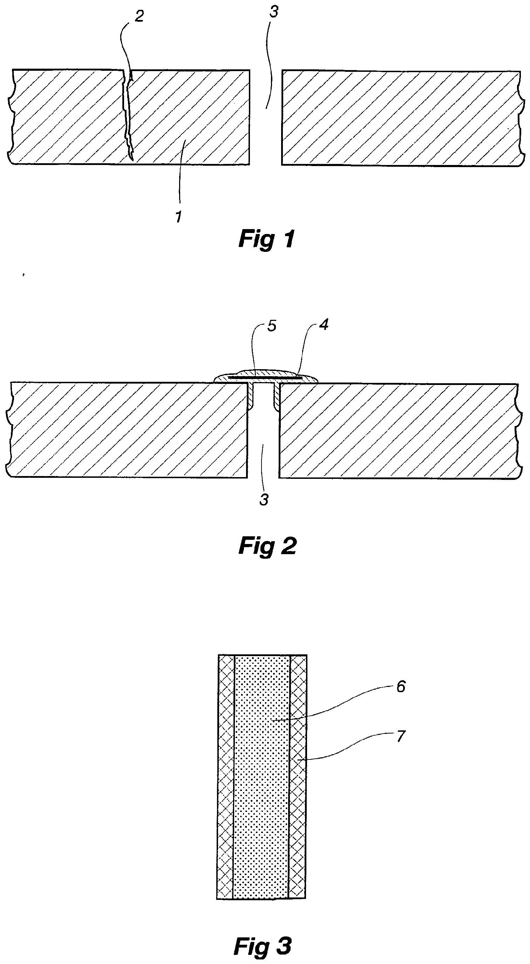

When used in conjunction with building materials such as geotextile fabric, the composition can be coated to the fabric in-situ, or the fabric can be precoated and supplied in a cured form as a waterproof, termite-proof membrane. In either case the membrane is made to adhere to the building materials by application of the composition in a liquid form followed by either the prepared membrane or the freshly coated fabric. The membrane when coated with the composition and cured is flexible, has good tensile strength so that it cannot be easily torn. Also the membrane has a slight degree of elasticity. The following example will serve to clarify the method of application of the composition:
Referring to Figure 1 illustrating a concrete slab 1 formed with a minor crack 2 and a construction joint 3 several millimetres wide. Both the crack 2 and the construction joint 3 provide points of entry for termites and/or moisture.

The crack can be sealed by applying the composition with a brush, roller or spray gun to form a continuous barrier at least 2 mm thick and several mm wide to form a flexible, durable barrier to moisture and insects. The composition can also be applied with a spatula or similar tool to force material into the crack and form an even more efficacious barrier.

However a construction joint cannot be sealed in this way and either of the following methods can be used.

Turning now to Figure 2 the composition 4 is applied to either side of the construction joint with a brush, roller, spray, spatula or other similar means. A piece of construction fabric 5 is first coated with the composition on one side, is then applied across the construction joint, coated side towards the concrete. A second coat is then applied across the fabric and the concrete so as to form a continuous waterproof, insect-proof barrier. It will be realised the drawings are illustrations only of the invention and thickness have been exaggerated for illustration purposes.

Alternatively the construction fabric can be pre-coated and cured and applied to the construction joint after the initial application of the composition to the concrete as described above . In this case, the barrier is completed by applying a second coat of the composition to the membrane after placing the prepared material across the construction joint, paying further attention to the edges of the membrane.

A further refinement of the technique is shown in Figure 3. This is applicable to sealing wall cavities and the like. The membrane 6 is prepared with the cured coating of the composition in a continuous roll with one or both edges 7 left uncoated. The pre-coated material can be cut to length as required, with the untreated edge of edges facilitating sealing the membrane to the concrete slab or to other construction material.

The invention when formed into a membrane by coating a construction material such as construction fabric whether pre-formed or formed in-situ can be described as a fibre-reinforced membrane. Thus the strength of the construction fabric is greatly enhanced by the fibres in the composition applied to the fabric.

Further examples of the application of the invention will now be described. The method of applying the membrane is as described above. The preferred form of the membrane is a pre-coated strip with one or both edges left untreated.

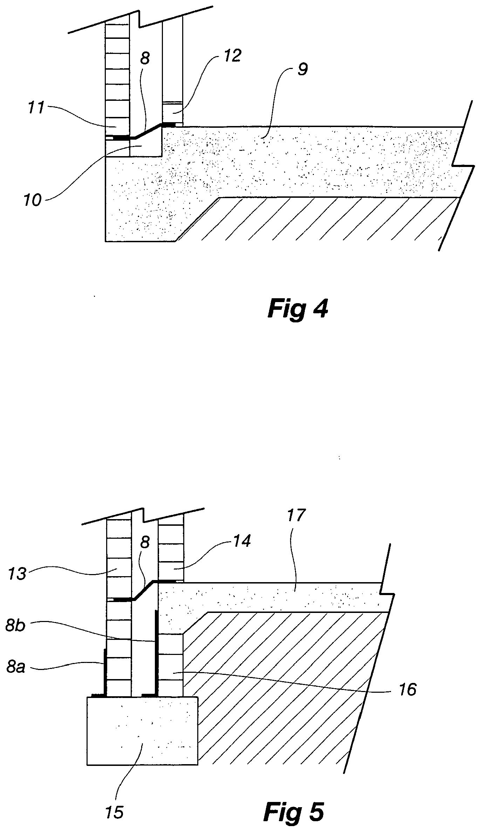

In Figure 4 the invention is applied to a brick veneer building on a monoslab foundation 9 having a stepped portion 10. The membrane 8 is positioned between one course of bricks 11 and between the bottom member 12 of the internal wall of the building. The membrane is rolled out, cut to length and sealed to the adjacent bricks and the concrete slab.

A further building construction is shown in Figure 5. The building is a full brick construction having outer wall 13 and inner wall 14. The foundation is of in-fill construction with a perimeter foundation 15 supporting the outer wall 13 and an in-fill wall 16. The concrete flow slab 17 of the building is supported on the in-fill wall portion 16. The membrane 8 is positioned between a course of bricks in the outer wall 13 and between the lowest course of the bricks of the inner wall 14 and the floor slab 17. In addition membranes 8a and 8b can be positioned and sealed by applying layer of the composition to the lower portions of the walls 13 and 16 and applying the membranes 8a and 8b, the flexibility of the membranes permitting it to be bent and be sealed against the top surface of the foundation 15. The membrane 8b extends up to and is also sealed to the lower side portion of the floor slab 17.

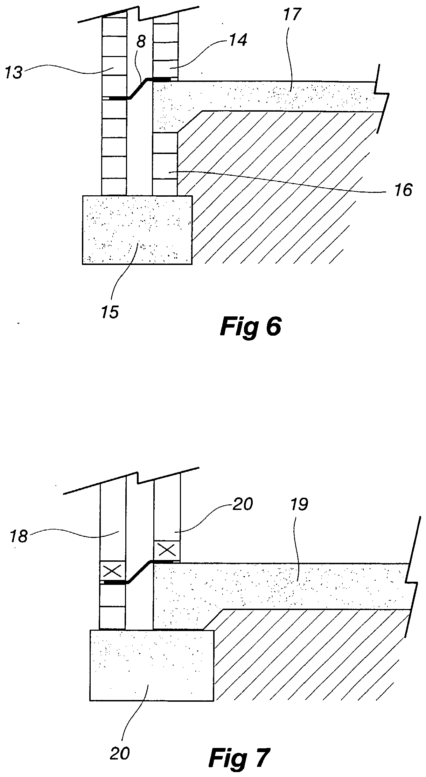

An alternate treatment of the building of Figure 5 is shown in Figure 6. In this instance the membranes 8a and 8b are not positioned against the lower surfaces of the walls 8 and 16, the protection of the building being provided by the membrane 8 bridging between the walls 13 and 14.

Figure 7 shows the application of the membrane 8 to extend between a course of bricks in the outer wall 18 to the top surface of a footing slab 19 beneath the inner wall 20. The footing slab rests on the perimeter foundation 20.

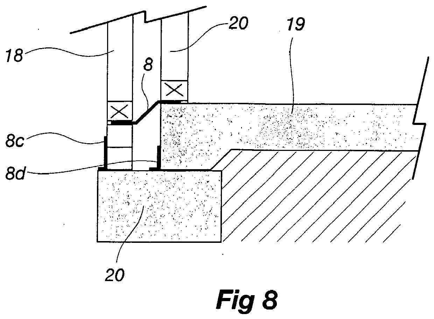

Extra protection to the building can be provided as shown in Figure 8 by the application of membranes 8c and 8d. Membrane 8c seals between the outer wall 18 and the foundation 20, while membrane 8d seals between the foundation 20 and the footing slab 19.

In an alternate construction the membrane 8 bridging the gap between the outer wall and the inner wall can be omitted, the protection being provided by membranes 8c and 8d.

The composition has many other applications in building construction and other areas.

Timber treatment, including posts and poles. In this application the composition can be applied direct to the timber as a waterproof, insect-proof coating or can be applied in conjunction with a fabric "sock" in the case of posts and poles to form a more efficacious system. It can be applied to bridging timbers especially abutment timbers . The composition can be used as a waterproof and termite resisting paste or glue for other construction materials, including stainless steel mesh, stainless steel sheeting, and light aluminium.

The composition can be used as a waterproofing material for general construction, to repair material breaches in damp courses and physical termite barriers, and as a waterproofing sealant in marine applications, for concrete, galvanised metal and other water holding tanks.

Thus there is provided according to the invention a composition which provides a waterproof and insect and vermin proof barrier. Although the composition can include a termiticide, as an alternative additive the barrier is provided without any such additive. The composition is self curing, and when applied to a material such as construction fabric forms a strong flexible membrane. The composition is self adhering to all surfaces and thus to seal the membrane to a surface, the composition itself can be used without the necessity of a separate adhesive.

## Claims

1. A waterproofing and insect and termite resistant composition comprising
- inorganic additives, selected from the group consisting of calcium carbonate, titanium dioxide, iron oxides, magnesium oxide, magnesium carbonate, silica, and silicates in an amount between 0 to 50% by weight,
- fibres, and
- a curable or settable component selected from the group consisting of acrylates, bitumen, water based silicones, and polyurethanes, in an amount between 20 to 80% by weight,
whereby the composition when applied as a thick paint or coating forms, when it cures, a waterproof, flexible membrane resistant to insects and termites.

2. A waterproofing and insect and termite barrier including a construction fabric impregnated with a composition as defined in claim 1 whereby the composition when cured forms a membrane that is waterproof, flexible and resistant to insects and termites.

3. A waterproofing and insect and termite membrane as defined in Claim 2, wherein the composition is impregnated into the fabric and cured prior to use.

4. A waterproofing and insect and termite resistant membrane as defined in Claim 3, wherein the membrane is formed in roll form, the edge or edges of the fabric being free of the impregnated composition.

5. A method of providing a waterproofing and termite barrier to a possible point of entry of termites to a building structure, the method including applying the composition defined in Claim 2 in liquid or paste form to the area surrounding the point of entry, applying the impregnated membrane to the composition to adhere thereto and applying a further layer of the composition over the membrane and adjacent structure.

6. A method of providing a waterproofing and termite barrier to a possible point of entry of termites to a building structure, the method including the steps of applying the composition of Claim 2 in liquid or paste form to the fabric, applying the fabric with the composition side to cover the point of entry, and applying a further layer of the composition in liquid or paste form over the fabric and surrounding area of the structure adjacent to the edge of the fabric.

7. A method of providing a waterproofing and insect and termite barrier across a cavity during a building construction, including providing a length of membrane to cover the length and width of the cavity, applying the composition of claim 2 to the portions of the building on each side of the cavity, applying the length of membrane with its edges positioned on the composition, applying further composition to the edges of the membrane and continuing construction of the building.

8. A method as defined in Claim 7, wherein the membrane bridges a cavity wall with one edge of the membrane anchored between a course of bricks in an outer wall and the inner edge anchored between portions of the inner wall, or between the inner wall and a concrete floor or foundation.

## Patentansprüche

1. Eine abdichtende und insekten- und termitenbeständige Zusammensetzung umfassend
- anorganische Additive ausgewählt aus der Gruppe bestehend aus Calciumcarbonat, Titandioxid, Eisenoxiden, Magnesiumoxid, Magnesiumcarbonat, Silika und Silikaten in einer Menge zwischen 0 bis 50 Gew.-%,
- Fasern und
- eine härtbare oder abbindefähige Komponente ausgewählt aus der Gruppe bestehend aus Acrylaten, Bitumen, wasserbasierten Silikonen und Polyurethanen in einer Menge zwischen 20 bis 80 Gew.-%,
wobei die Zusammensetzung, wenn sie als dicker Anstrich oder Beschichtung angewendet wird, eine wasserdichte, flexible Membran bildet, die beständig gegen Insekten und Termiten ist, wenn sie aushärtet.

2. Eine Abdichtung und Insekten- und Termitenbarriere umfassend ein Konstruktionsgewebe, das mit einer Zusammensetzung, wie in Anspruch 1 definiert, imprägniert ist, wobei die Zusammensetzung, wenn sie aushärtet, eine Membran bildet, die wasserdicht, flexibel und beständig gegen Insekten und Termiten ist.

3. Eine Abdichtung und Insekten- und Termitenmembran, wie in Anspruch 2 definiert, wobei die Zusammensetzung in das Gewebe imprägniert und vor der Verwendung ausgehärtet wird.

4. Eine Abdichtung und Insekten- und Termitenmembran, wie in Anspruch 3 definiert, wobei die Membran eine Rollenform bildet, deren Gewebekante oder deren Gewebekanten frei von der imprägnierten Zusammensetzung sind.

5. Ein Verfahren zum Anbringen einer Abdichtung und Termitenbarriere an einem möglichen Eintrittsort von Termiten in einer Baustruktur, wobei das Verfahren das Aufbringen der Zusammensetzung, wie in Anspruch 2 definiert, in flüssiger oder pastöser Form auf den Bereich, der den Eintrittsort umgibt; Aufbringen der imprägnierten Membran auf die Zusammensetzung, um darauf zu haften; und Aufbringen einer weiteren Schicht der Zusammensetzung über die Membran und angrenzende Struktur umfasst.

6. Ein Verfahren zum Anbringen einer Abdichtung und Termitenbarriere an einem möglichen Eintrittsort von Termiten in einer Baustruktur, wobei das Verfahren die Schritte des Aufbringens der Zusammensetzung aus Anspruch 2 in flüssiger oder pastöser Form auf das Gewebe; des Aufbringens des Gewebes mit der Seite der Zusammensetzung, um den Eintrittsort zu bedecken; und des Aufbringens einer weiteren Schicht der Zusammensetzung in flüssiger oder pastöser Form über das Gewebe und den umgebenden Bereich der Struktur, die an den Rand des Gewebes angrenzt, umfasst.

7. Ein Verfahren zum Anbringen einer Abdichtung und Insekten- und Termitenbarriere über einen Hohlraum während einer Gebäudekonstruktion umfassend Anbringen der Länge der Membran, um die Länge und die Breite des Hohlraums zu bedecken; Aufbringen der Zusammensetzung aus Anspruch 2 auf die Teile des Gebäudes auf jeder Seite des Hohlraums; Aufbringen der Länge der Membran mit ihren Kanten, die auf die Zusammensetzung positioniert werden; Aufbringen einer weiteren Zusammensetzung auf die Kanten der Membran und Weiterführen der Konstruktion des Gebäudes.

8. Ein Verfahren, wie in Anspruch 7 definiert, wobei die Membran eine Hohlwand überbrückt, wobei eine Kante der Membran zwischen einer Steinschicht in einer Außenwand und die innere Kante zwischen Teilen der Innenwand oder zwischen der Innenwand und einem Betonboden oder einem Betonfundament verankert ist.

## Revendications

1. Composition d'étanchéité résistante aux insectes et aux termites, comprenant :
- des additifs minéraux choisis dans le groupe constitué du carbonate de calcium, du dioxyde de titane, des oxydes de fer, de l'oxyde de magnésium, du carbonate de magnésium, de la silice et des silicates, à hauteur d'entre 0 et 50 % en poids,
- des fibres, et
- un composant polymérisable ou durcissable choisi dans le groupe constitué d'acrylates, de bitume, de silicones à base d'eau et de polyuréthanes, à hauteur d'entre 20 et 80 % en poids,
la composition, quand on l'applique sous forme de peinture épaisse ou de revêtement, quand elle polymérise, formant une membrane étanche et souple, résistante aux insectes et aux termites.

2. Barrière d'étanchéité résistante aux insectes et aux termites, incluant un tissu de construction imprégné d'une composition comme définie à la revendication 1, la composition, quand elle polymérise, formant une membrane étanche et souple, résistante aux insectes et aux termites.

3. Membrane d'étanchéité résistante aux insectes et aux termites selon la revendication 2, dans laquelle la composition est imprégnée dans le tissu et polymérisée avant utilisation.

4. Membrane d'étanchéité résistante aux insectes et aux termites selon la revendication 3, la membrane étant sous forme de rouleau, le ou les bords du tissu étant exempts de composition imprégnée.

5. Procédé de création d'une barrière d'étanchéité résistante aux insectes et aux termites à un point d'entrée possible de termites dans une structure de bâtiment, le procédé incluant d'appliquer la composition selon la revendication 2 sous forme de liquide ou de pâte à la surface entourant le point d'entrée, d'appliquer la membrane imprégnée à la composition pour qu'elle y adhère, et d'appliquer une autre couche de la composition sur la membrane et la structure adjacente.

6. Procédé de création d'une barrière d'étanchéité résistante aux insectes et aux termites à un point d'entrée possible de termites dans une structure de bâtiment, le procédé incluant les étapes d'application de la composition selon la revendication 2 sous forme de liquide ou de pâte sur le tissu, d'application du tissu avec le côté traité par la composition pour couvrir le point d'entrée, et d'application d'une autre couche de la composition sous forme de liquide ou de pâte sur le tissu et la zone alentour de la structure adjacente au bord du tissu.

7. Procédé de création d'une barrière d'étanchéité résistante aux insectes et aux termites à travers une cavité pendant la construction d'un bâtiment, incluant la création d'une longueur de membrane pour couvrir la longueur et la largeur de la cavité, l'application de la composition selon la revendication 2 aux portions du bâtiment de chaque côté de la cavité, l'application de la longueur de membrane avec les côtés positionnés sur la composition, l'application à nouveau de composition sur les côtés de la membrane, et la continuation de la construction du bâtiment.

8. Procédé comme défini à la revendication 7, dans lequel la membrane relie la paroi d'une cavité à un bord de la membrane ancré entre une rangée de briques dans un mur extérieur et le bord interne ancré entre des portions du mur intérieur, ou entre le mur intérieur et un sol ou une fondation en béton.
